Europäisches Patentamt

European Patent Office

Office européen des brevets

(19)

(11) Veröffentlichungsnummer: **0 149 794**
**B1**

(12) # EUROPÄISCHE PATENTSCHRIFT

(45) Veröffentlichungstag der Patentschrift:
09.03.88

(21) Anmeldenummer: **84115320.8**

(22) Anmeldetag: **12.12.84**

(51) Int. Cl.⁴: **H 04 B 3/14**

(54) Einstellbarer Laufzeitentzerrer.

(30) Priorität: 20.01.84 DE 3401994

(43) Veröffentlichungstag der Anmeldung:
31.07.85 Patentblatt 85/31

(45) Bekanntmachung des Hinweises auf die Patenterteilung:
09.03.88 Patentblatt 88/10

(84) Benannte Vertragsstaaten:
AT BE CH DE FR GB IT LI NL SE

(56) Entgegenhaltungen:
DE - A - 2 364 249
DE - A - 2 535 257
FR - A - 2 234 717

PATENTS ABSTRACTS OF JAPAN, Band 6, Nr. 164
(E-127) (1042) 27. August 1982 & JP-A-5783915
ELECTRICAL DESIGN NEWS, Band 22, Nr. 7, 5. April
1977, Seiten 74-77, DENVER, (US). C.R. HOFFMANN:
"Develop your own effective delay-distortion
equalizer".

(73) Patentinhaber: Siemens Aktiengesellschaft Berlin und
München, Wittelsbacherplatz 2, D-8000 München 2 (DE)

(72) Erfinder: Bücherl, Erwin, Dipl.-Ing., Baumeisterstrasse 8,
D-8000 München 71 (DE)
Erfinder: Gutsche, Hermann, Dipl.-Math.,,
Fichtenstrasse 25 d, D-8034 Germering (DE)
Erfinder: Pfitzenmaier, Gerhard, Dr.-Ing.,, Eschenrieder
Strasse 21, D-8038 Gröbenzell (DE)
Erfinder: Schelling, Dieter, Dipl.-Ing.,,
Irminfriedstrasse 52, D-8032 Grfelfing (DE)

## Beschreibung

Die Erfindung betrifft einen Laufzeitenzerrer gemäss dem Oberbegriff des Patentanspruches 1.

Zur Optimierung von Nachrichtenübertragungssystemen werden oft eine konstante Betriebsdämpfung und eine konstante Gruppenlaufzeit in den Übertragungsfrequenzbereichen angestrebt. Da jedoch die selektiven Komponenten solcher Systeme in der Regel sowohl Verzerrungen der Betriebsdämpfung als auch der Gruppenlaufzeit verursachen, sind Entzerrerschaltungen vorzusehen, welche die entsprechenden Kurvenläufe jeweils zu einem konstanten Wert ergänzen.

Aus mancherlei Gründen wird oft die stufenlose oder schrittweise einstellbare Veränderbarkeit der Entzerrerkurve gewünscht, vorzugsweise dergestalt, dass bei allen Entzerrereinstellungen die bei einer oder mehreren Frequenzen definierten Funktionswerte unverändert bleiben, also sogenannte Dreh- oder Fixpunkte bilden.

Während dieses Problem bezüglich der Betriebsdämpfung z.B. durch die «Bode-Entzerrer» weitgehend gelöst ist (H.W. Bode, BSTJ 1938, S. 229 –244), sind entsprechende Schaltungen zur Regelung der Gruppenlaufzeit mit Fixpunkten bisher nicht bekannt.

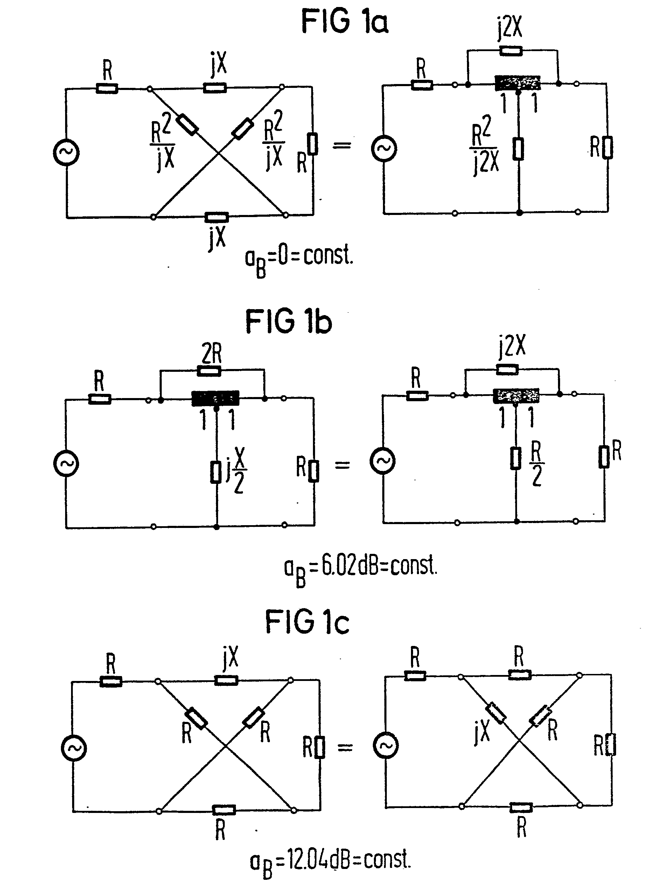

Dem Stand der Technik entsprechende Laufzeitenzerrer sind Allpässe, die durch die Kettenschaltung von Elementar-Allpassgliedern oder durch ein Allpassglied höherer Ordnung realisiert werden, wobei der Aufwand von der angestrebten Entzerrungsgenauigkeit abhängt (Saal/Antreich, Frequenz 16, 1962, S. 469–477). In bekannter Weise, z.B. in dem Buch von Temes/LaPatra, «Introduction to Circuit Synthesis and Design» Mac Graw Hill Book Co, 1977, z.B. S. 248, sind realisierende Schaltungen für Allpässe von der symmetrischen Brücke (Kreuzglied) abgeleitet; zur Erzeugung eines Allpasses mit der Betriebsdämpfung $a_B = 0$ müssen günstigstenfalls jeweils zwei zueinander duale Brückenreaktanzen verwirklicht werden (Fig. 1a). Kann eine frequenzunabhängige Betriebsdämpfung von $a_B = 6,02$ dB, bzw. von $a_B = 12,04$ dB hingenommen werden, so wird in bekannter Weise bei unveränderter Laufzeitcharakteristik eine der beiden Reaktanzen durch einen ohmschen Widerstand ersetzt (Fig. 1b und 1c; sog. Darlington-Allpässe).

Die Parameter der Elementar-Allpassglieder werden in einem Optimierungsprozess bestimmt. Eine Veränderbarkeit der Entzerrungscharakteristik ist nur begrenzt möglich durch Verstimmen einzelner Bauelemente. Die von der Entzerrereinstellung unabhängige Erzeugung von Fixpunkten der Laufzeit bei definierten Referenzfrequenzen stellt bei der Optimierung einen zusätzlichen und meist schwer beherrschbaren Zwang dar.

Eine andere praktizierte Möglichkeit der Laufzeitvariation besteht darin, dass in einer Kettenschaltung von Allpassgliedern einzelne Allpassglieder je nach den Erfordernissen durch andere – nach Art eines Baukastensystems – gezielt ersetzt werden.

Solche Massnahmen sind umständlich, unflexibel, zeit- und damit kostenaufwendig, elektrisch ungünstig wegen wechselnder Anschlussbedingungen, platzverbrauchend wegen der notwendigen Lagerhaltung der Einzelbausteine und bergen überdies die Gefahr von Fehlschaltungen in sich. Laufzeitfixpunkte bei gewünschten Referenzfrequenzen sind nicht oder nur mit mangelnder Genauigkeit zu erzielen.

Der Erfindung liegt die Aufgabe zugrunde, den vorstehend geschilderten Schwierigkeiten abzuhelfen und Möglichkeiten zur Realisierung von Entzerrerschaltungen anzugeben, bei denen eine verhältnismässig grosse Freizügigkeit für den Entwurf der Schaltung gegeben ist und Laufzeitfixpunkte bei gewünschten Referenzfrequenzen mit ausreichender Genauigkeit zu erzielen sind und darüber hinaus die Möglichkeit gegeben ist, im Fixpunkt eine nach Betrag und Richtung vorgebbare einstellungsunabhängige Laufzeitsteilheit zu realisieren.

Gemäss der Erfindung wird diese Aufgabe für Laufzeitentzerrer nach dem Oberbegriff des Patentanspruches 1 entsprechend den Merkmalen des kennzeichnenden Teiles des Patentanspruches 1 gelöst.

Vorteilhafte Ausgestaltungen sind in den Unteransprüchen angegeben.

Im einzelnen liegen der Erfindung folgende Überlegungen zu Grunde.

Ausgehend von bekannten Schaltungen (Fig. 1) für Laufzeitentzerrer mit verschwindender (Allpass: Kreuzglied oder davon abgeleitete Strukturen) oder endlicher, aber konstanter Betriebsdämpfung (sog. Darlington Entzerrer) besteht die laufzeitbestimmende (Kreuzglied-)Reaktanz $x_K(\eta)$ (alle Rechnungen in normierter Form) des einstellbaren Laufzeitentzerrers zur Erzeugung von Laufzeitkurven nach Art einer achssymmetrischen Parabel mit variabler Öffnung

$$t(\eta) = t_F \pm d / \cdot [\eta - \eta_F]^n \text{ (d variabel)}, \qquad (1)$$

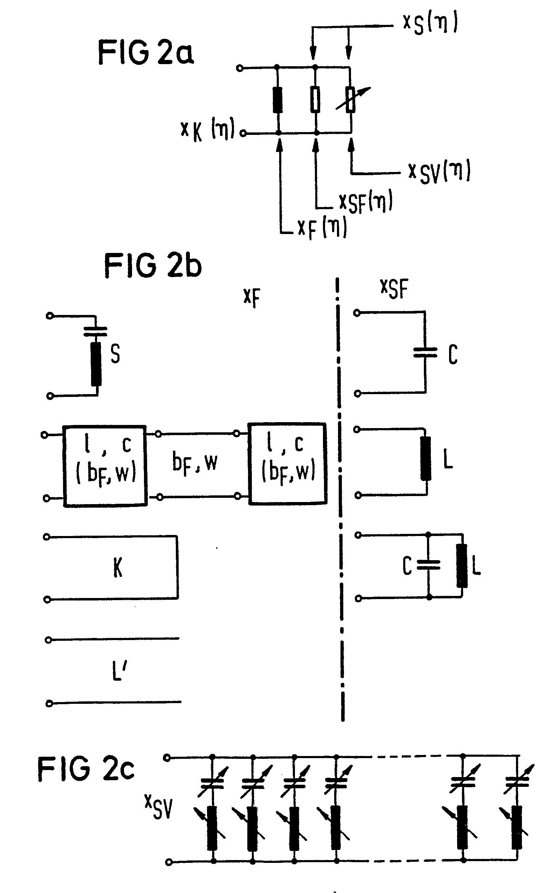

wobei diese Laufzeitkurven durch die einstellungsunabhängige, auch nicht-ganzzahlige Parabelordnung n, durch die einstellungsunabhängige Position des Parabel-Scheitelpunktes $\eta_F$, $t_F$ und durch die einstellungsunabhängige Tangente $dt/d\eta$ im Scheitelpunkt – vorzugsweise $dt/d\eta = 0$ – charakterisiert sind, aus der Parallelschaltung (Fig. 2a, 2b, 2c) einer als Steuerreaktanz bezeichneten Reaktanz $x_S(\eta)$ und einer als Festreaktanz bezeichneten Reaktanz $x_F(\eta)$. Diese Steuerreaktanz wird aus der Parallelschaltung eines Festanteils – bestehend aus einer Induktivität oder einer Kapazität oder einem Parallelschwingkreis (Fig. 2b) – und eines variablen Teils gebildet, der aus einer vorzugsweise geraden Anzahl von parallelgeschalteten Serienschwingkreisen besteht (Fig. 2c), wobei die Resonanzfrequenzen eines Teils der Serienschwingkreise – vorzugsweise der halben Anzahl – (eingeschlossen sind zweipolig äquivalente Schaltungsformen) bei Frequenzen unterhalb der Scheitelpunktsfrequenz $\eta_F$ und diejenigen des anderen Teils bei Frequenzen oberhalb der Scheitelpunktsfrequenz $\eta_F$ liegen und

durch die Variation der Schwingkreiskapazitäten oder ersetzenden Bauelementen, wie z.B. Kapazitätsdioden, so einstellbar sind, dass der Wert $x_S(\eta_F)$ der Steuerreaktanz bei der Scheitelpunktsfrequenz $\eta_F$ entsprechend der Europäischen Patentanmeldung 0 149 793, veröffentlicht am 31.7.1985, zwischen der Festreaktanz $x_F(\eta)$, der Steuerreaktanz $x_S(\eta_F)$ und der Laufzeitsteigung $k=dt/d\eta$ im Laufzeitfixpunkt $\eta_F$, $t_F$

$$x_S(\eta_F) = 2 \cdot \frac{x_F'^2(\eta_F)}{x_F''(\eta_F) - k/2} \qquad (2)$$

wenigstens näherungsweise konstant gehalten wird. Diese Festreaktanz wird aus einem Serienschwingkreis mit der Resonanzfrequenz $\eta_F$ gebildet (Fig. 2a) oder aus einem eingangsseitig und/oder ausgangsseitig reaktiv beschalteten (Leerlauf und Kurzschluss sind eingeschlossen) Abschnitt einer Übertragungsleitung, dergestalt, dass eingangsseitig bei der Scheitelfrequenz $\eta_F$ eine Reaktanznullstelle auftritt (Fig. 2b).

Als Vorzugsfälle für die Festreaktanz $x_F$ sind hierbei anzusehen: der ausgangsseitig kurzgeschlossene Leitungsabschnitt mit dem Wellenwiderstand w und der elektrischen Länge

$$b_F = v \cdot 180° \text{ bei } \eta = \eta_F, v = 1,2,3, \ldots \qquad \text{(Fig. 2c)}$$

und der ausgangsseitig leerlaufende Leitungsabschnitt mit dem Wellenwiderstand w und der elektrischen Länge

$$b_F = 90° + v \cdot 180° \text{ bei } \eta = \eta_F, v = 0,1,2, \ldots$$
$$\text{(Fig. 2b).}$$

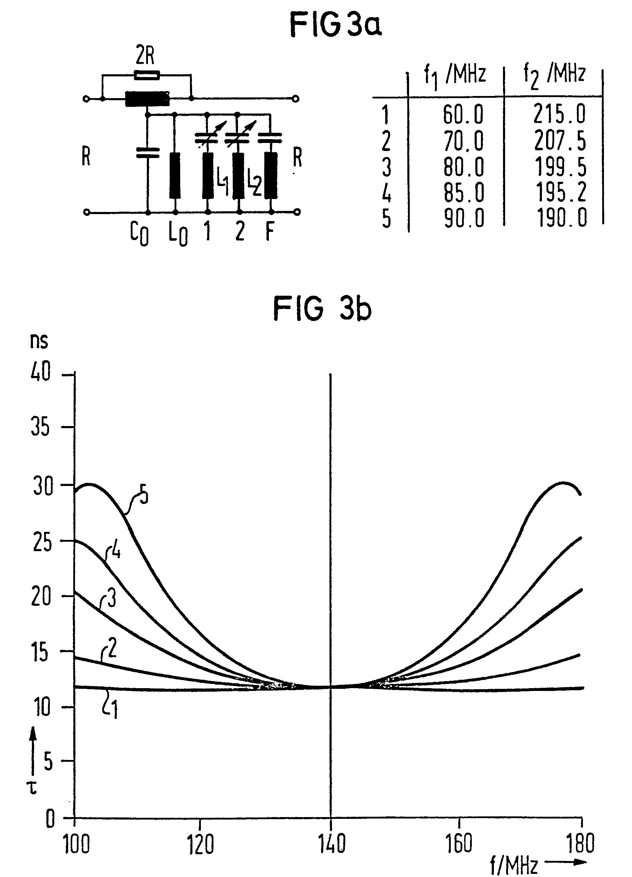

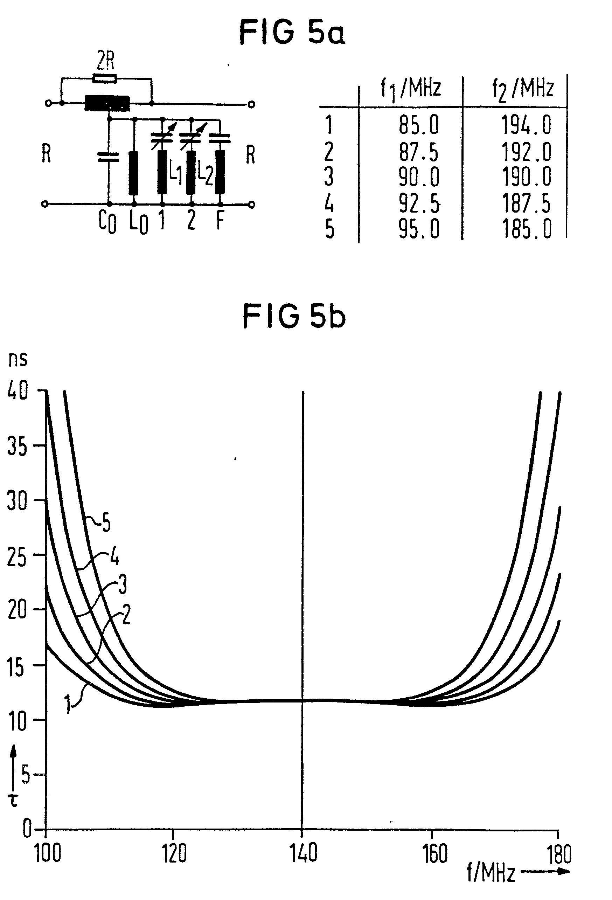

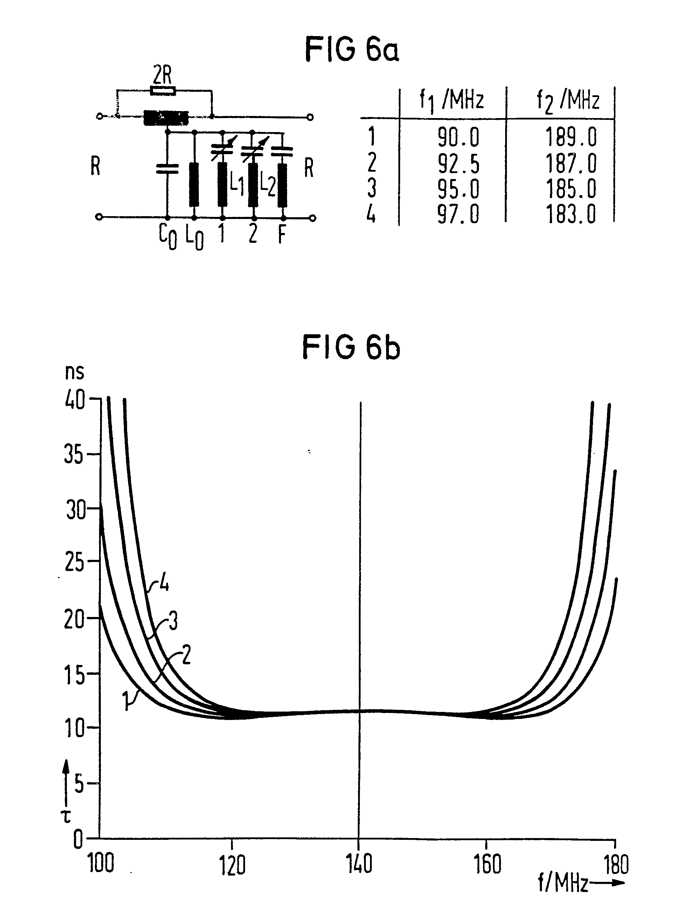

Als besonders vorteilhaft wird ausserdem angesehen, dass die Ordnung n der mit der obigen Schaltungsanordnung erzielbaren Laufzeitparabeln in erster Linie vom L/C-Verhältnis der in der Steuerreaktanz enthaltenen Serienschwingkreise abhängt und dadurch in weiten Grenzen einstellbar ist. Beispiele hierfür sind die in den Fig. 3,4, 5, 6 dargestellten Scharen von Laufzeitparabeln, die jeweils etwa den Parabelordnungen n=2, n=4, n=6, n=9 entsprechen.

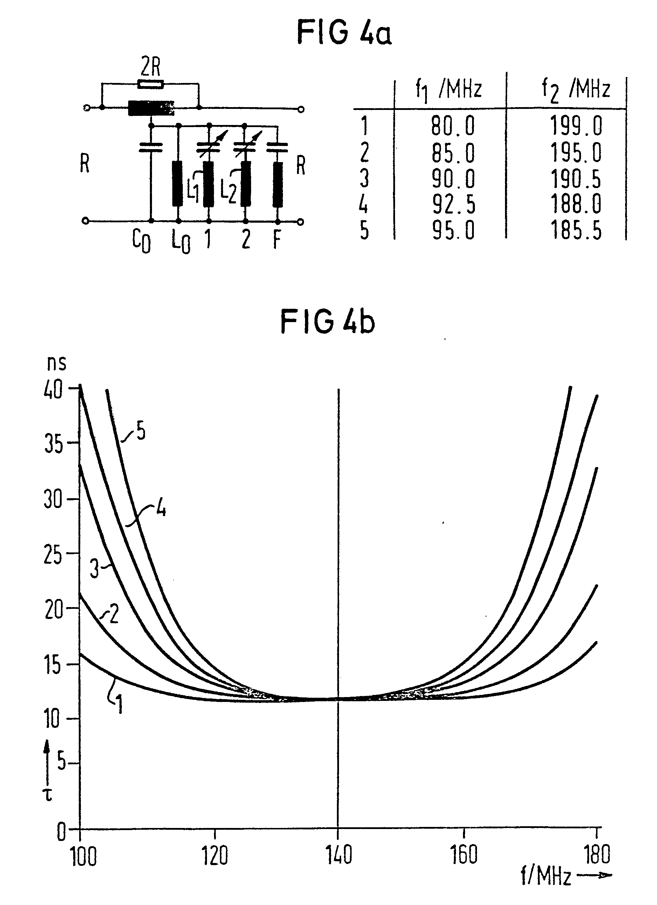

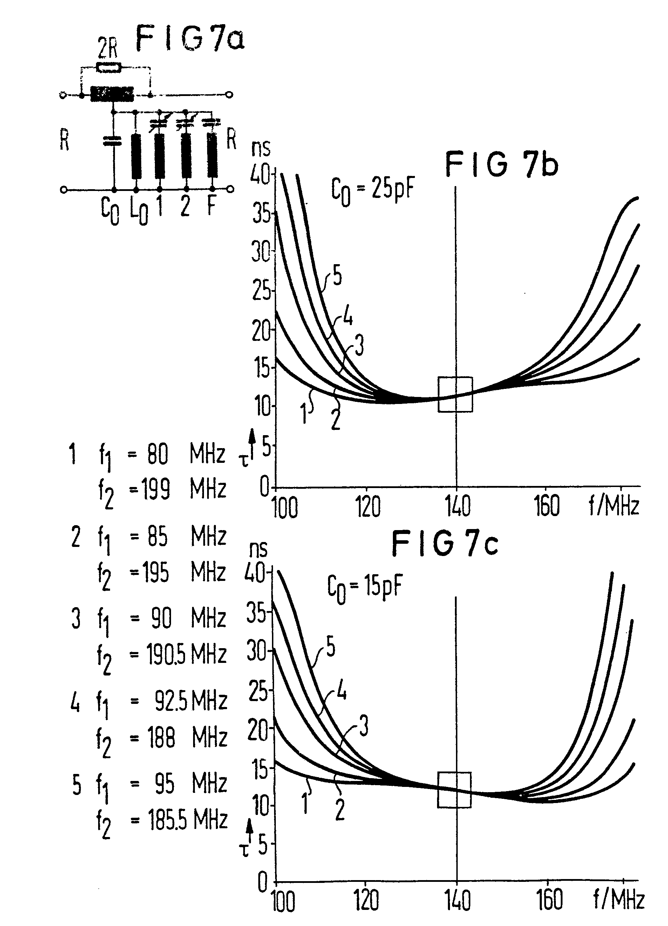

Weiterhin wird als besonders vorteilhaft angesehen, dass es die erfindungsgemässen Schaltungen erlauben, mittels einfacher Massnahmen – allein schon durch Werteänderung eines einzigen Schaltelements im Festanteil der Steuerreaktanz – in eindeutiger Weise die Laufzeitsteigung einer Parabelschar im Scheitelpunkt stufig oder stetig zu verändern. Die in Fig. 7a, b, c gezeigten Parabelscharen mit positiver und negativer Laufzeitsteilheit im Scheitelpunkt gehen aus der in Fig. 4 dargestellten Parabelschar mit horizontaler Tangente beispielsweise allein durch eine Änderung von $C_o = 20$pF um $\pm 5$pF hervor.

Die erfindungsgemässen Schaltungen bieten weiterhin folgende Möglichkeiten.

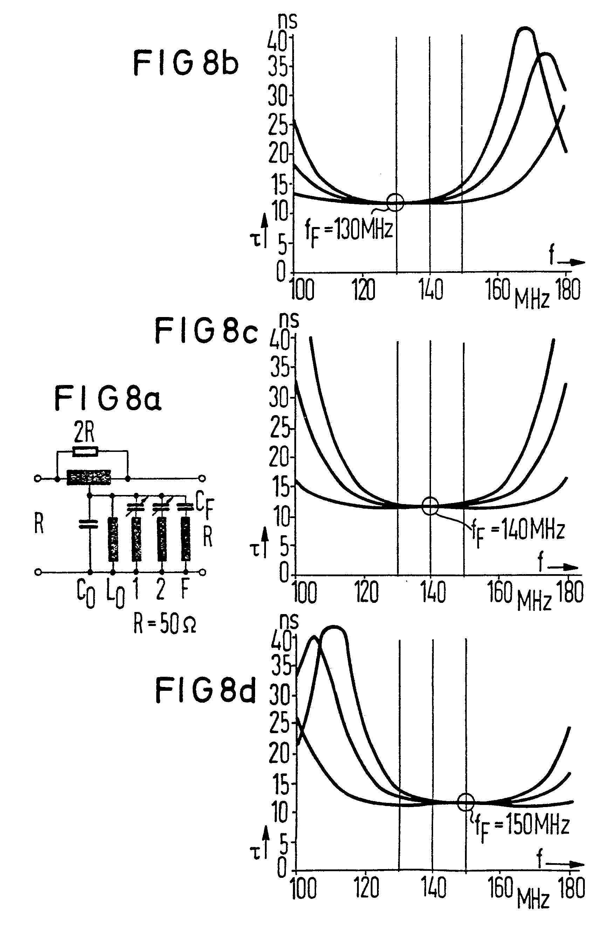

Die Laufzeitkurven des einstellbaren Entzerrers können wenigstens in geringem Mass auf der Frequenzachse verschoben werden dergestalt, dass die Kurvenformen wenigstens näherungsweise erhalten bleiben und die Laufzeit des Fixpunktes konstant bleibt, und die Frequenz $f_F$ des Laufzeitfixpunktes durch Variation der Kapazität $C_F$ des als Festreaktanz arbeitenden Serienschwingkreises entsprechend der gewünschten Frequenzverschiebung eingestellt wird, wobei die damit verbundene Änderung der Laufzeitsteilheit im Fixpunkt durch eine Korrektur am Kondensator $C_o$ bzw. an der Induktivität $L_o$ des Parallelschwingkreises (Festanteil der Steuerreaktanz) in eindeutiger Weise ausgeglichen wird. Fig. 8a bis 8d zeigt ein Anwendungsbeispiel.

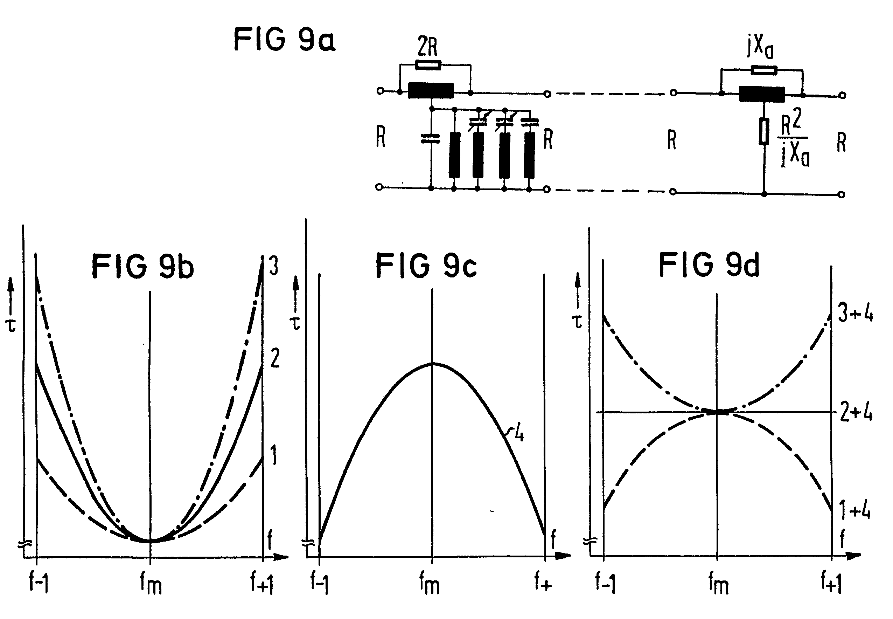

Die parabelförmigen Laufzeitkurven des einstellbaren Entzerrers sind durch die Vorhaltung einer geeigneten Laufzeitparabel gleicher Ordnung mit positiver oder negativer Öffnung – realisiert durch die Kettenschaltung eines fest abgestimmten Laufzeitenzerrers – auch in Hubbereiche umsetzbar, die mit dem einstellbaren Entzerrer allein nur mit technischen Nachteilen oder überhaupt nicht zu erzielen wären. Ein Beispiel ist Fig. 9a bis 9d bei stetigem oder stufigem Übergang von einer Laufzeitparabel mit positiver Öffnung in eine Laufzeitparabel mit negativer Öffnung.

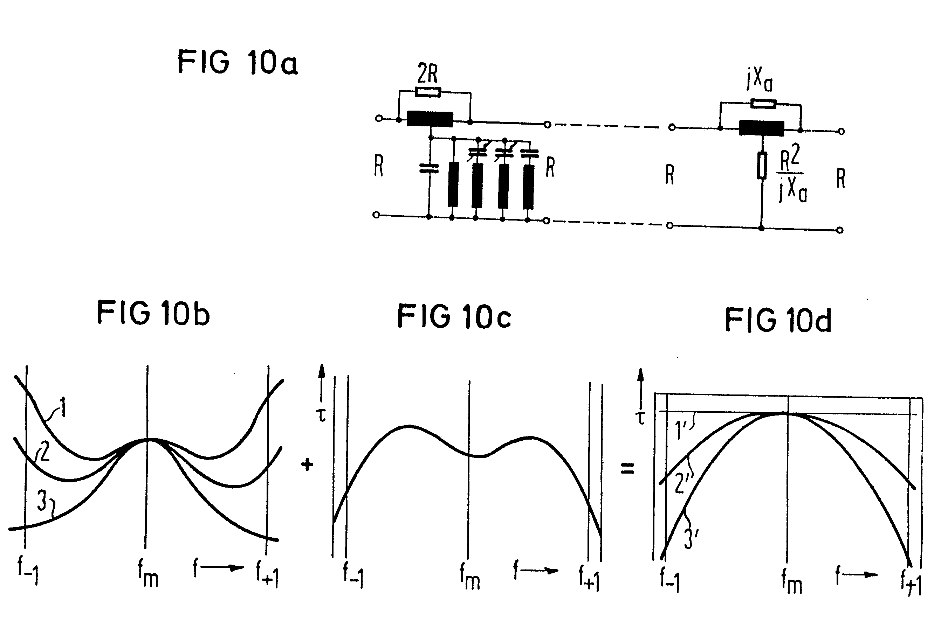

Die Laufzeitkurven des einstellbaren Entzerrers können eine von der Parabel mehr oder weniger abweichende Form aufweisen und erst durch die Kettenschaltung eines fest abgestimmten oder variablen Entzerrers zu Parabeln ergänzt werden. Ein prinzipielles Beispiel ist in Fig. 10a bis 10d angegeben.

Anhand von Ausführungsbeispielen wird nachstehend die Erfindung noch näher erläutert.

Es zeigen in der Zeichnung

Fig. 1a, b, c bekannte Laufzeitentzerrerschaltungen nach den eingangs erwähnten Literaturstellen;

Fig. 2a, b, c einen erfindungsgemässen Aufbau der Kreuzgliederreaktanz eines einstellbaren Laufzeitentzerrers zur Erzeugung von parabelähnlichen Laufzeitkurven;

Fig. 3a, b die erfindungsgemässe Erzeugung einer Schar von Laufzeitparabeln (Ordnung $n \approx 2$; $L_1 = 126,3$nH; $L_2 = 116,3$nH) mit konstantem Scheitelfixpunkt und horizontaler Tangente im Fixpunkt;

Fig. 4a, b die erfindungsgemässe Erzeugung einer Schar von Laufzeitparabeln (Ordnung $n \approx 4$; $L_1 = 205$nH; $L_2 = 185$nH) mit konstantem Scheitelfixpunkt und horizontaler Tangente im Fixpunkt;

Fig. 5a, b, die erfindungsgemässe Erzeugung einer Schar von Laufzeitparabeln (Ordnung $n \approx 6$; $L_1 = 300$ nH; $L_2 = 280$ nH) mit konstantem Scheitelfixpunkt und horizontaler Tangente im Fixpunkt;

Fig. 6a, b, die erfindungsgemässe Erzeugung einer Schar von Laufzeitparabeln (Ordnung $n \approx 9$; $L_1 = 500$nH; $L_2 = 400$ nH) mit konstantem Scheitelfixpunkt und horizontaler Tangente im Fixpunkt;

Fig. 7a, b, c, die Änderung der Laufzeitsteilheit einer Parabelschar (Ordnung $n \approx 4$) im Fixpunkt durch Variation des Parallelschwingkreiskondensators $C_0$;

Fig. 8a, b, c, d die Frequenzverschiebung einer Parabelschar durch Änderung der Frequenz $f_F$ des Laufzeitfixpunktes;

Fig. 9a, b, c, d die Umsetzung einer Schar von Laufzeitparabeln in einen anderen Auslenkungsbereich;

Fig. 10a, b, c, d eine Kombination eines einstellbaren Laufzeitentzerrers gem. der Erfindung, der selbst keine Parabelkurven erzeugt, mit einem festabgestimmten Allpass zur Realisierung von Laufzeitkurven nach Art einer Parabel.

Wie bereits einleitend erwähnt, sind in den Fig. 1a, b, c Schaltungen nach dem Stand der Technik gezeichnet, auf die hier zum besseren Verständnis der Erfindung kurz eingegangen sei. Die Fig. 1a zeigt ein sog. Kreuzglied mit dem Blindwiderstand jX im Längszweig bzw. $R^2$/jX im Diagonalzweig, wenn R der Betriebswiderstand der Schaltung ist. Bekanntlich ist völlig wirkungsgleich hierzu die in Fig. 1a mitgezeichnete Schaltung, die aus einem überbrückten T-Glied besteht, in dessen Längszweig ein Übertrager mit dem Übersetzungsverhältnis 1:1 vorgesehen ist und in dessen Überbrückungszweig ein Blindwiderstand j2X liegt. Der Querzweig der Schaltung enthält entsprechend den Widerstand $R^2$/j2X. Es handelt sich bei Fig. 1a also um eine Allpassschaltung, deren Betriebsdämpfung den Wert $a_B$=0=const. hat. In den Fig. 1b und 1c sind sog. Darlington-Allpassschaltungen gezeichnet. Die Schaltung in Fig. 1b hat die Dämpfung $a_B$=6,02dB=const., die in Fig. 1c gezeichnete Schaltung hat die Dämpfung $a_B$=12,04dB=const. In den Fig. 1b und 1c sind ebenfalls jeweils zwei zueinander äquivalente Schaltungsvarianten gezeichnet, deren Schaltelemente unmittelbar auch angegeben sind und im Zusammenhang mit Fig. 1a der Zeichnung unmittelbar entnehmbar sind.

Die Fig. 2a, b, und c zeigen erfindungsgemässe Möglichkeiten zur Aufteilung der Kreuzgliederreaktanz $s_K(\eta)$, wenn unter $x_K$ als Beispiel hier die Kreuzgliederreaktanz (Fig. 1a) zu verstehen ist. In Fig. 2a wird die Kreuzgliederreaktanz $x_K$ durch eine Parallelschaltung aus einer Festreaktanz $x_F(\eta)$, einem Festanteil $x_{SF}(\eta)$ der Steuerreaktanz $x_S(\eta)$ und einem variablen Teil $x_{SV}(\eta)$ der Steuerreaktanz $x_S(\eta)$ gebildet.

In der Tabelle von Fig. 2b sind Möglichkeiten für die schaltungstechnische Ausgestaltung der Festreaktanz $x_F$ und des Festanteils der Steuerreaktanz $x_{SF}$ angegeben. Die Festreaktanz $x_F$ kann also aus einem Serienschwingkreis S, bzw. aus Blindwiderstandsschaltungen mit den Schaltelementen 1 und c bzw. aus Übertragungsleitungen mit dem Phasenmass $b_F$ und dem Wellenwiderstand w, aus einer kurzgeschlossenen Leitung K bzw. aus einer leerlaufenden Leitung L' bestehen. Der Festanteil $x_{SF}$ der Steuerreaktanz $x_S$ besteht aus einem Kondensator C oder einer Spule L oder einem Parallelresonanzkreis aus Spule L und Kondensator C.

In Fig. 2c ist eine Schaltung für den variablen Teil $x_{SV}$ der Steuerreaktanz $x_S$ gezeigt. Es sind dabei mehrere Serienresonanzkreise parallelgeschaltet, wobei die gestrichelte Linie kenntlich machen soll, dass dort weitere Serienresonanzkreise zugeschaltet werden können, so dass also die Anforderungen zur Realisierung eines Zweipols mit der Zweipolimpedanz $x_{SV}$ erreicht wird. Mit der durch einen Pfeil dargestellten Möglichkeit, die Kapazitätswerte der Kondensatoren zu ändern, lässt sich eine Änderung der Öffnung der Laufzeitparabel bei Erhaltung der Parabelordnung n, der Position des Parabelscheitels und der Laufzeitsteilheit im Scheitelpunkt erreichen. Die ebenfalls miteingezeichnete Möglichkeit, den Wert der Induktivitäten zu ändern, bewirkt eine Änderung der Parabelordnung n bei sonst gleichen Eigenschaften.

In den Fig. 3a bis 8a sind Schaltungen gezeigt, die Möglichkeiten für die Realisierung darstellen. Der angegebene Widerstand R ist jeweils 50 Ohm. Als Festanteil der Steuerreaktanz ist ein Parallelresonanzkreis $L_0$, $C_0$ verwendet; der variable Teil $x_S$ der Steuerreaktanz $x_S$ wird durch die Serienschwingkreise 1 und 2 gebildet. Als Festreaktanz dient der Serienschwingkreis F. Diese Schaltungsbestandteile liegen zueinander parallel im Querzweig der Gesamtschaltung, deren Längszweig aus einem Übertrager mit dem Übersetzungsverhältnis 1:1 besteht, der mit dem Widerstand 2R überbrückt ist. Die angegebenen Tabellen $f_1$ und $f_2$ lassen jeweils in MHz die zu den Serienschwingkreisen gehörenden Resonanzfrequenzen erkennen.

In den weiterhin mitgezeichneten Kurvendarstellungen (Fig.3b bis 8d) ist die Laufzeit $\tau$ in ns(Nanosekunden) in Abhängigkeit von der Frequenz f aufgetragen. Die an den Kurven angegebene Bezifferung entspricht direkt den fünf Tabellenzeilen. In den Fig. 8b, 8c und 8d ist zu erkennen, wie der Fixpunkt $f_F$ auf 130MHz bzw. auf 140mHz bzw. auf 150MHz gelegt werden kann, wenn der Kondensator $C_0$ und der im Serienresonanzkreis F enthaltene Kondensator im Beispiel etwa Werte zwischen 15pF und 23pF haben.

In den Fig. 9a und 10a ist schematisch die Kettenschaltung aus einer erfindungsgemäss aufgebauten und bemessenen Entzerrerschaltung nach einer der Fig. 3a bis 8a und aus einem bekannten Entzerrer nach Fig. 1a gezeigt. In Fig. 9b ist zu erkennen, dass der einstellbare Entzerrer Laufzeitparabeln erzeugt. Fig. 9c zeigt, dass dort der nachfolgende festabgestimmte Allpass eine Laufzeitparabel mit einer der ausgezogen gezeichneten Kurve entsprechenden, jedoch negativen Öffnung erzeugt. Die Fig. 9d zeigt, dass durch Summenbildung von Fig. 9a und Fig. 9b Laufzeitparabeln mit positivem und negativem Auslenkungsbereich entstehen.

Fig. 10b lässt erkennen, dass der erfindungsgemäss bemessene Laufzeitentzerrer Laufzeitkurven erzeugt, die von der Parabelform erheblich abweichen. Fig. 10c zeigt, dass der festabgestimmte Allpass bzw. ein entsprechend einstellbarer Laufzeitentzerrer somit die zur Erzeugung für die Parabelform benötigte Restlaufzeit erzeugt. In Fig. 10d sind die Summenkurven beider Laufzeitentzerrer entsprechend einer gewünschten Parabelform dargestellt.

Zur weiteren Erläuterung sei noch folgendes ausgeführt.

Die in den Fig. 3a bis 10a angegebenen einstellbaren Laufzeitentzerrer enthalten als laufzeitbestimmende Reaktanz jeweils die Parallelschaltung dreier Serienschwingkreise und eines Parallelschwingkreises.

Einer dieser Serienschwingkreise ($l_F$, $c_F$, $\eta_F$)

Festreaktanz

$$x_F(\eta = 1_F \cdot \frac{1}{\eta} \cdot (\eta^2 - \eta_F^2) \tag{3}$$

$$x'_F(\eta_F) = 2 \cdot 1_F \tag{4}$$

$$x''_F(\eta_F) = -2 \cdot \frac{1_F}{\eta_F} \tag{5}$$

$$2 \cdot \frac{x'^2_F(\eta_F)}{x''_F(\eta_F) - k/2} = -16 \cdot \frac{1_F^2 \cdot \eta_F}{4l_F + k \cdot \eta_F} \tag{6}$$

Festanteil der Steuerreaktanz

$$x_{SF}(\eta) = -\frac{1}{c_o} \cdot \frac{\eta}{\eta^2 - \dfrac{1}{1_o c_o}} \tag{7}$$

Variabler Teil der Steuerreaktanz

$$x_{sv}(\eta) = \frac{1_1 \cdot 1_2}{1_1 + 1_2} \cdot \frac{(\eta^2 - \eta_1^2)(\eta^2 - \eta_2^2)}{\eta^2 - \dfrac{c_1 + c_2}{c_1 \cdot c_2 \cdot (1_1 + 1_2)}} \tag{8}$$

Setzt man alle Teilreaktanzen in Gleichung (2) ein, so ergibt sich als Bedingung für die vorgegebene Laufzeitsteigerung k im Fixpunkt

$$c_o \cdot \frac{\eta_F^2 - \dfrac{l}{l_o c_o}}{\eta_F} - \frac{1_1 + 1_2}{1_1 \cdot 1_2} \cdot \eta_F \frac{\eta_F^2 - \dfrac{c_1 + c_2}{c_1 \cdot c_2 \cdot (1_1 + 1_2)}}{(\eta_F^2 - \dfrac{1}{1_1 \cdot c_1}) \cdot (\eta_F^2 - \dfrac{1}{1_2 \, c_2})} = 16 \cdot \frac{4l_F + k \cdot \eta_F}{1_F^2 \cdot \eta_F} \tag{9}$$

Die beiden Variablen $c_1$ und $c_2$ hängen demnach in der durch (9) beschriebenen Weise voneinander ab, damit im Variationsbereich die Laufzeitsteigung k konstant bleibt.

Legt man insbesondere den Pol des variablen Teils der Steuerreaktanz einstellungsunabhängig auf die Fixfrequenz $\eta_F$ – durch entsprechende Bemessung von $c_1$ und $c_2$ – so entfällt der mittlere Term in (9) und es ergibt sich beispielsweise für die horizontale Laufzeittangente (k=0) im Fixpunkt der einfache Zusammenhang

stellt die zur Erzeugung eines Fixpunktes nötige Festreaktanz $x_F(\eta)$ dar. Die beiden anderen Serienschwingkreise ($l_1$, $c_1$, $\eta_1$, $l_2$, $c_2$, $\eta_2$) enthalten veränderbare Kondensatoren $c_1$, $c_2$ und fungieren als variabler Teil der Steuerreaktanz $x_S(\eta)$, während der Parallelschwingkreis ($l_o$, $c_o$, $\eta_o$) als Festanteil der Steuerreaktanz aufzufassen ist. Die Berechnung wird für die Kreuzgliederreaktanz als Beispiel durchgeführt.

$$c_o = \frac{1}{\eta_F^2}\left(\frac{1}{l_o} + \frac{1}{4l_F}\right) \tag{10}$$

zwischen den Parametern der Festreaktanz und dem zu dimensionierenden Festanteil der Steuerreaktanz (Parallelschwingkreis).

## Patentansprüche

1. Einstellbarer Laufzeitentzerrer mit verschwindender (Allpass besteht aus Kreuzglied oder davon abgeleiteten Strukturen) oder endlicher, aber konstanter Betriebsdämpfung (Darlington-Entzerrer) zur Erzeugung von Laufzeitkurven nach Art einer achssymmetrischen Parabel mit variabler Öffnung nach der Gleichung $t(\eta)=t_F\pm d\cdot|\eta-\eta_F|^n$ (d variabel), wobei die Laufzeitkurven durch eine einstellungsunabhängige, ggfs. auch nicht-ganzzahlige Parabelordnung n, durch eine einstellungsunabhängige Position des Parabelscheitelpunktes ($\eta_f$, $t_F$) und durch eine einstellungsunabhängige Tangente $dt/d\eta$ im Scheitelpunkt, ggfs. $dt/d\eta=0$, festgelegt sind, mit einer laufzeitbestimmenden (Kreuzglied-)Reaktanz ($x_K$), dadurch gekennzeichnet, dass die Kreuzgliedreaktanz ($x_K$) aus der Parallelschaltung einer Steuerreaktanz ($x_S$) und einer Festreaktanz ($x_F$) besteht, und dabei die Steuerreaktanz ($x_S$) aus der Parallelschaltung eines Festanteils ($x_{SF}$), bestehend aus einer Induktivität oder einer Kapazität oder einem Parallelschwingkreis und eines variablen Teils ($x_{SV}$) gebildet ist, der aus parallelgeschalteten Serienschwingkreisen besteht und dabei die Resonanzfrequenzen eines Teils dieser Serienschwingkreise bei Frequenzen unterhalb der Scheitelpunktsfrequenz $\eta_F$ und diejenigen des anderen Teils bei Frequenzen oberhalb der Scheitelpunktsfrequenz $\eta_F$ liegen, während die Festreaktanz ($x_F$) aus einem Serienschwingkreis mit der Resonanzfrequenz $\eta_F$ oder aus einem eingangsseitig und/oder ausgangsseitig reaktiv beschalteten Abschnitt einer Übertragungsleitung gebildet ist, derart, dass eingangsseitig bei der Scheitelfrequenz $\eta_F$ eine Reaktanznullstelle auftritt.

2. Einstellbarer Laufzeitentzerrer nach Anspruch 1, dadurch gekennzeichnet, dass ein ausgangsseitig kurzgeschlossener Leitungsabschnitt mit dem Wellenwiderstand w und der elektrischen Länge $b_F=\upsilon\cdot180°$ bei $\eta=\eta_F$, $\upsilon=1, 2, 3 \ldots$ oder ein ausgangsseitig leerlaufender Leitungsabschnitt mit dem Wellenwiderstand w und der elektrischen Länge $b_F=90°+\upsilon\cdot180°$ bei $\eta = \eta_F$, $\upsilon = 0, 1, 2 \ldots$ als Festreaktanz ($x_F$) dient.

3. Einstellbarer Laufzeitentzerrer nach Anspruch 1, dadurch gekennzeichnet, dass die Ordnung n der Laufzeitparabeln überwiegend vom L/C-Verhältnis der in der Steuerreaktanz ($x_S$) enthaltenen Serienschwingkreise festgelegt ist.

**Revendications**

1. Correcteur réglable de temps de propagation possédant un affaiblissement effectif, qui disparaît (un filtre passe-haut est formé par une cellule en treillis ou par des structures qui en sont dérivées) ou est infini, mais constant (correcteur de Darlington), pour produire des courbes de temps de propagation en forme de paraboles symétriques par rapport un axe et possédant une ouverture variable correspondant à la relation $t(\eta)=t_F\pm d\cdot|\eta-\eta_F|^n$ (d variable) les courbes de temps de propagation étant déterminées par un ordre de parabole n, qui ne dépend pas du réglage et éventuellement n'est également pas un nombre pair, par une position, indépendante du réglage, du sommet ($\eta_F$, $t_F$) de la parabole et par une tangente au sommet ($dt/d\eta$), indépendante du réglage, avec éventuellement $dt/d\eta=0$, et comportant une réactance (de la cellule en treillis) ($x_K$) déterminant le temps de propagation, caractérisé par le fait que la réactance ($x_K$) de la cellule en treillis est constituée par le branchement en parallèle d'une réactance de commande ($x_S$), et d'une réactance fixe ($x_F$), et que la réactance de commande ($x_S$) est formée par le branchement en parallèle d'une partie fixe ($x_{SF}$), constituée par une inductance ou par une capacité ou par un circuit oscillant parallèle, et d'une partie variable ($x_{SV}$), qui est constituée par des circuits oscillants série branchés en parallèle, et que les fréquences de résonance d'une partie de ces circuits oscillants série sont inférieures à la fréquence $\eta_F$ du sommet et les fréquences de résonance de l'autre partie sont supérieures à la fréquence $\eta_F$ du sommet, tandis que la réactance fixe ($x_F$) est formée par un circuit oscillant série possédant la fréquence de résonance $\eta_F$ ou par une section, raccordée côté entrée et/ou côté sortie par une réactance, d'une ligne de transmission de telle sorte qu'un point d'annulation de la réactance apparaît, côté entrée, pour la fréquence $\eta_F$ du sommet.

2. Correcteur réglable de temps de propagation suivant la revendication 1, caractérisé par le fait qu'une section de ligne court-circuitée côté sortie, possédant l'impédance caractéristique w et la longueur électrique $b_F=\upsilon.180°$ pour $\eta=\eta_F$, $\upsilon=1, 2, 3 \ldots$, ou une section de ligne, qui est branchée en circuit ouvert côté sortie, possède l'impédance caractéristique w et la longueur électrique $b_F=90°+\upsilon\cdot180°$ pour $\eta = \eta_F$, $\upsilon = 0, 1, 2, \ldots$ est utilisée en tant que réactance fixe ($x_F$).

3. Correcteur réglable de temps de propagation suivant la revendication 1, caractérisé par le fait que l'ordre n des paraboles représentant les temps de propagation est fixé dans une large mesure par le rapport L/C des circuits oscillants série que contient la réactance de commande ($x_S$).

**Claims**

1. An adjustable delay equaliser with a negligible (all-pass filter comprises of lattice network or structures derived therefrom) or finite but constant operating attenuation (Darlington equaliser) for the generation of delay curves in the form of an axially symmetrical parabola with a variable opening in accordance with the equation $t(\eta)=t_f\pm d\cdot|\eta-\eta F|^n$ (d variable), where the delay curves are governed by a parabola classification n which is independent of the adjustment and possibly is also non-integral, by a position of the parabola summit point ($\eta_F$, $t_F$) which is independent of the adjustment, and by a tangent $dt/d\eta$ at the summit point which is independent of the adjustment, and possibly where $dt/d\eta=0$, with a delay-determining (lattice network) reactance ($x_K$), characterised in that the lattice network reactance ($x_K$) comprises the parallel arrangement of a control reactance ($x_S$) and a fixed reactance ($x_F$) where the control reactance ($x_S$) is formed by the parallel arrangement of a fixed component ($x_{SF}$), composed of an inductance or a capacitance or a parallel oscillating circuit, and a variable compo-

nent ($x_{SV}$) composed of parallel-connected series oscillating circuits, and a variable component ($x_{SV}$) composed of parallel-connected series oscillating circuits, and where the resonance frequencies of one section of these series oscillating circuits occur at frequencies below the summit point frequency $\eta_F$ and those of the other section occur at frequencies above the summit point frequency $\eta_F$, whereas the fixed reactance ($x_F$) comprises a series oscillating circuit with the resonance frequency $\eta_F$ or a section of a transmission line which is reactively connected at its input end and/or output end, in such manner that at the summit frequency $\eta_F$ a reactance zero point occurs at the input end.

2. An adjustable delay equaliser as claimed in claim 1, characterised in that the fixed reactance ($x_F$) comprises a line section, short-circuited at its output, with the surge resistance w and the electrical length $b_F = \upsilon.180°$ where $\eta = \eta_F$, $\upsilon = 1, 2, 3 \ldots$ or a line section, running idle at its output, with the surge resistance w and the electrical length $b_F = 90° + \upsilon \cdot 180°$ where $\eta = \eta_F$, $\upsilon = 0, 1, 2 \ldots$

3. An adjustable delay equaliser as claimed in claim 1, characterised in that the classification n of the delay parabolae is fundamentally determined by the L/C ratio of the series oscillating circuits included in the control reactance ($x_S$).

# FIG 1a

$$a_B = 0 = \text{const.}$$

# FIG 1b

$$a_B = 6.02\,dB = \text{const.}$$

# FIG 1c

$$a_B = 12.04\,dB = \text{const.}$$

FIG 2a

$x_S(\eta)$

$x_K(\eta)$

$x_{SV}(\eta)$

$x_{SF}(\eta)$

$x_F(\eta)$

FIG 2b

$x_F$

$x_{SF}$

S

C

$\begin{array}{c} l\,,\,c \\ (b_F,w) \end{array}$   $b_F,w$   $\begin{array}{c} l\,,\,c \\ (b_F,w) \end{array}$

L

K

C   L

L'

FIG 2c

$x_{SV}$

## FIG 3a

| | $f_1$ /MHz | $f_2$ /MHz |
|---|---|---|
| 1 | 60.0 | 215.0 |
| 2 | 70.0 | 207.5 |
| 3 | 80.0 | 199.5 |
| 4 | 85.0 | 195.2 |
| 5 | 90.0 | 190.0 |

## FIG 3b

# FIG 4a

| | $f_1$ /MHz | $f_2$ /MHz |
|---|---|---|
| 1 | 80.0 | 199.0 |
| 2 | 85.0 | 195.0 |
| 3 | 90.0 | 190.5 |
| 4 | 92.5 | 188.0 |
| 5 | 95.0 | 185.5 |

# FIG 4b

# FIG 5a

| | $f_1$/MHz | $f_2$/MHz |
|---|---|---|
| 1 | 85.0 | 194.0 |
| 2 | 87.5 | 192.0 |
| 3 | 90.0 | 190.0 |
| 4 | 92.5 | 187.5 |
| 5 | 95.0 | 185.0 |

# FIG 5b

# FIG 6a

| | $f_1$ /MHz | $f_2$ /MHz |
|---|---|---|
| 1 | 90.0 | 189.0 |
| 2 | 92.5 | 187.0 |
| 3 | 95.0 | 185.0 |
| 4 | 97.0 | 183.0 |

# FIG 6b

FIG 7a

2R

R          R

C₀  L₀  1  2  F

FIG 7b

ns

$C_0 = 25pF$

40
35
30
25
20
15
10
5
0

5
4
3
1  2

100      120      140      160    f/MHz

1  $f_1 = 80$ MHz
   $f_2 = 199$ MHz

2  $f_1 = 85$ MHz
   $f_2 = 195$ MHz

3  $f_1 = 90$ MHz
   $f_2 = 190.5$ MHz

4  $f_1 = 92.5$ MHz
   $f_2 = 188$ MHz

5  $f_1 = 95$ MHz
   $f_2 = 185.5$ MHz

FIG 7c

ns

$C_0 = 15pF$

40
35
30
25
20
15
10
5
0

5
4
3
1  2

100      120      140      160    f/MHz

FIG 8b

FIG 8c

FIG 8a

2R

R

$C_F$

R

$C_0$ $L_0$ 1 2 F

R = 50 Ω

$f_F$ = 130 MHz

$f_F$ = 140 MHz

FIG 8d

$f_F$ = 150 MHz

FIG 9a

FIG 9b

FIG 9c

FIG 9d

FIG 10a

$jX_a$

$\dfrac{R^2}{jX_a}$

R

R

R

2R

R

R

FIG 10b

FIG 10c

FIG 10d

$f_{-1}$    $f_m$    $f$    $f_{+1}$

$\tau$

1   2   3

1'   2'   3'

+

=